# EUROPÄISCHE PATENTSCHRIFT

(11) **EP 0 395 573 B1**
(45) Veröffentlichungstag und Bekanntmachung des Hinweises auf die Patenterteilung: **07.12.1994**
(21) Anmeldenummer: 90810242.9
(22) Anmeldetag: 26.03.1990
(51) Int. Cl.: C02F 1/48

(54) **Einrichtung zur magnetischen Behandlung eines Fluids**
Device for the magnetic treatment of a fluid
Dispositif de traitement magnétique d'un liquide

(30) Priorität: 30.03.1989 CH 1154/89
(43) Veröffentlichungstag der Anmeldung: 31.10.1990
(73) Patentinhaber: Isola, Alice, I-16000 Genua (IT)
(72) Erfinder: Mondiny, Pierre,, CH-4513 Langendorf, (CH)
(74) Vertreter: Kulhavy, Sava, Dipl.-Ing.

(56) Entgegenhaltungen:
- EP-A- 0 119 368
- EP-A- 0 325 185
- WO-A-86/04887
- CH-A- 649 754
- GB-A- 2 064 504

## Beschreibung

Die vorliegende Erfindung betrifft eine Einrichtung zur magnetischen Behandlung eines Fluids, insbesondere von Wasser, mit einem im wesentlichen rohrförmigen Mantel, mit einer Magnetanordnung, welche zumindest einen stabförmigen Magnet enthält und welche im Inneren des Mantels derart angeordnet ist, dass zwischen der Innenseite des Mantels und der Aussenseite der Magnetanordnung ein Spalt vorhanden ist, mit Endstücken, welche den Enden des Mantels zugeordnet sind und über welche die Einrichtung an ein Leitungsnetz anschliessbar ist, wobei das jeweilige Endstück einen mittigen Hohlraum aufweist, und mit wenigstens zwei Kanälen, welche den mittigen Hohlraum mit dem Spalt strömungsmässig verbinden.

Eine Einrichtung dieser Gattung ist bereits aus WO-A 86/04887 bekannt und sie weist zwei Verbindungskanäle auf. Diese Verbindungskanäle befinden sich nahe nebeneinander, wobei einer dieser Kanäle teilweise über dem anderen liegt. Da die Wasserstränge, welche durch solche Verbindungskanäle im Spalt gebildet werden, nahe nebeneinander verlaufen und da diese dabei noch unterschiedliche Winkel gegenüber der Innenwand des Spaltes aufweisen, entstehen im Wasser, welches sich entlang der Einrichtung durch den Spalt bewegt, Turbulenzen, welche den laminaren Fluss desselben stören.

Eine weitere Einrichtung derselben Gattung ist aus EP-A 0 119 368 bekannt.

Die Aufgabe der vorliegenden Erfindung ist, eine Einrichtung der genannten Gattung anzugeben, welche diesen Nachteil nicht aufweist und welche zudem noch andere Vorteile bietet.

Diese Aufgabe wird bei der Einrichtung der eingangs genannten Gattung erfindungsgemäss so gelöst, wie dies im Anspruch 1 definiert ist.

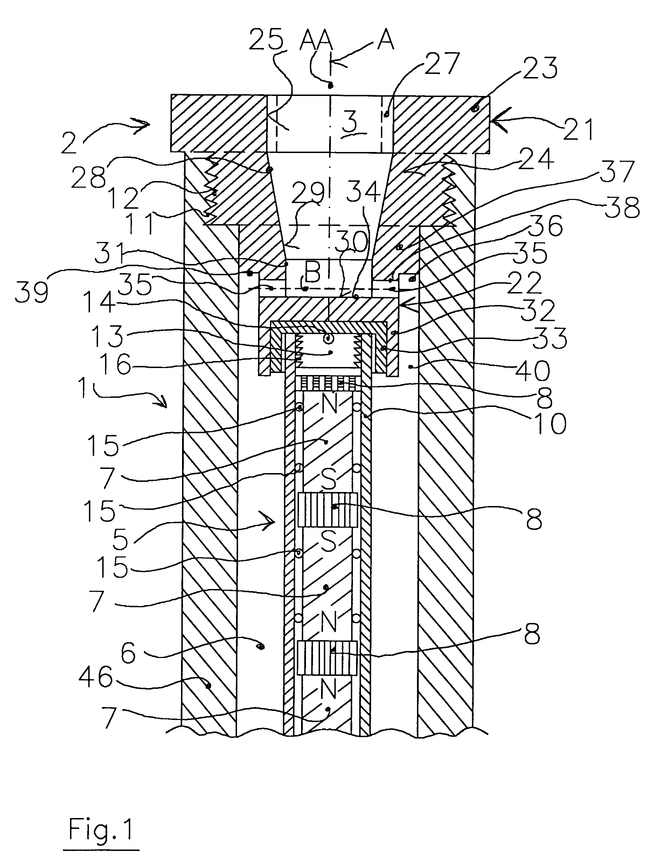

Nachstehend werden Ausführungsbeispiele der vorliegenden Einrichtung anhand der bei liegenden Zeichnungen näher erläutert. Es zeigt:
Fig. 1 in einem Längsschnitt ein erstes Beispiel der vorliegenden Einrichtung,
Fig. 2 einen Querschnitt durch einen inneren Abschnitt eines der Endstücke der Einrichtung nach Fig. 1,
Fig. 3 in einem Längsschnitt eine weitere Ausführungsform des genannten Endstückes,
Fig. 4 in einem Längsschnitt ein weiteres Beispiel der vorliegenden Einrichtung,
Fig. 5 in einem Längsschnitt eine Ausführungsform jenes Endstückes, welches sich im Auslassbereich der Einrichtung befindet,
Fig. 6 in einem Längsschnitt eine Hälfte einer weiteren Ausführung eines der Endstücke der vorliegenden Einrichtung,
Fig. 7 in einem Längsschnitt eine Hälfte einer noch weiteren Ausführung eines der Endstücke der vorliegenden Einrichtung,
Fig. 8 in einem Längsschnitt eine Hälfte eines Auslass-Endstückes der vorliegenden Einrichtung, welches auf jeden Fall dann zur Anwendung gelangt, wenn das Endstück gemäss Fig. 7 als Einlassendstück der vorliegenden Einrichtung verwendet wird oder umgekehrt und
Fig. 9 in einem Längsschnitt ein noch weiteres Beispiel der vorliegenden Einrichtung,
Die Einrichtung gemäss Fig. 1 weist einen Mantel 1 auf, welcher praktisch rohrförmig ist. Dieser Mantel umfasst ein Rohrstück 46, welches aus einem weichmagnetischen Material ist. Als ein solches Material kommt beispielsweise rostfreier Stahl in Frage. Aber auch in diesem Fall ist die Innenseite des Mantelrohres 46 mit einer Schutzschicht (nicht dargestellt) vorteilhaft versehen, welche den Mantel 1 gegen Rostbefall schützt. Materiale für solche Schutzschichten sind allgemein bekannt und als Beispiel für ein solches Material kann Berlacryl von der Firma Berlac AG genannt werden.

An jedem Ende des Mantels 1 befindet sich ein Endstück 2, welches mit der betreffenden Endpartie des Mantels 1 verbindbar ist und diese verschliesst. Im dargestellten Beispiel ist die Innenseite des Mantels 1 mit einem Gewinde 11 und die Aussenseite des Endstückes 2 ist mit einem entsprechenden Gewinde 12 versehen. Das Endstück 2 kann somit in die Endpartie des Mantels 1 bzw. des Rohrstückes 46 eingeschraubt werden. Die Endstücke 2, welche an den Enden des Mantels 1 angeschraubt sind, können gleich ausgebildet sein. Im Endstück 2 ist ein mittiger Hohlraum 3 ausgeführt, in welchem die Endpartie eines der Rohre eines äusseren Leitungssystems, z.B. einer Hausinstallation (nicht dargestellt), befestigt sein kann. Mittels solcher Rohre wird das Fluid, beispielsweise Wasser, der Einrichtung zugeführt und von dieser weggeführt.

Im Inneren des durch die Endstücke 2 beiderends geschlossenen Mantels 1 befindet sich eine Magnetanordnung 5. Diese Anordnung 5 ist im wesentlichen stabförmig und die Längsachse derselben fällt mit dem inneren Abschnitt der Längsachse des Mantels 1 praktisch zusammen. Die Magnetanordnung 5 ist somit im Mantel 1 praktisch koaxial angeordnet. Zwischen der Innenseite des Mantels 1 und der Aussenseite der Magnetanordnung 5 ist ein Spalt 6 vorhanden, dessen Querschnitt ringförmig ist.

Die Magnetanordnung 5 enthält im dargestellten Beispiel kurze Stabmagnete 7, welche so ausgeführt sind, dass der jeweilige Pol S bzw. N sich in einer der Endpartien des Stabes 7 befindet. Die Magnete 7 sind so angeordnet, dass die Längsachsen derselben miteinander fluchten und dass die Magnete 7 der Magnetanordnung 5 somit einen Stab bilden. In diesem Stab sind die Magnete 7 so orientiert, dass die gleichnamigen Pole der benachbarten Magnete 7 einander zugewandt sind. Zwischen den benachbarten Magneten 7 befindet sich je eine Einlage 8. Diese Einlagen 8 haben die Form von kurzen Walzen und sie können beispielsweise aus Eisen oder aber auch aus Kunststoff sein.

Die Magnetanordnung 5 umfasst ferner ein rohrförmiges Gehäuse 10, in welchem die hintereinander angeordneten und sich abwechselnden Permanentmagnete 7 und Einlagen 8 untergebracht sind. Die Innenwand des Gehäuserohres 10 ist im Bereich wenigstens einer der Endpartien desselben mit einem Gewinde 16 versehen, in dem ein Stopfen 13 eingeschraubt ist. Wenn nur eine Endschraube 13 verwendet wird, dann kann man das andere Ende des Gehäuserohres 10 mit einem fest angebrachten Boden (nicht dargestellt) verschliessen. Der Stopfen 13 ist als eine Bolzenschraube (Madenschraube) ausgeführt, wobei der Bolzen derselben mit einem Schlitz 14 zum Einsetzen eines Schraubenziehers (nicht dargestellt) versehen ist. Eine der Einlagen 8 befindet sich auch zwischen dem letzten der Permanentmagnete 7 und der im Inneren des Gehäuses 10 liegenden Stirnfläche der Endschraube 13.

Der Durchmesser der Ein- bzw. Zwischenlagen 8 ist so gewählt, dass diese im Gehäuserohr 10 spielfrei sitzen. Der Durchmesser der Magnete 7 ist dagegen ein wenig kleiner als der Innendurchmesser des Gehäuserohres 10. Im Spalt, welcher zwischen der Aussenseite der Magnete 7 und der Innenseite des Mantelrohres 10 vorhanden ist, befinden sich Distanzringe 15 aus einem nachgiebigen Material. Anstelle der Distanzringe 15 kann man die Magnete 7 mit einer Hülse, vorteilhaft aus einem Kunststoff, versehen, welche zumindest die zylinderförmige Wand des jeweiligen Magneten 7 überdeckt. Der Magnet 7 kann jedoch auch allseitig von einem solchen Gehäuse umgeben sein. Bei einer solchen Ausführung der Magnete 7 können die Einlagen 8 zwischen den Magneten 7 unter Umständen wegfallen.

Das Endstück 2 weist einen äusseren Abschnitt 21 und einen inneren Abschnitt 22 auf. Der äussere Endstück-Abschnitt 21 ist zum Anschluss der Einrichtung an ein Rohrleitungsnetz sowie zum Zusammenwirken mit dem Mantel 1 ausgebildet. Der innere Endstückabschnitt 22 ist zum Zusammenwirken mit der Magnetanordnung 5 sowie zum Einführen der Fluidstränge in den Spalt 6 bzw. zum Herausführen des behandelten Fluids aus dem Spalt 6 ausgebildet.

Das Endstück 2 ist vorteilhaft aus Messing. Die äussere Randpartie 23 des äusseren Endstück-Abschnittes 21 ist als eine Mutter, vorteilhaft als Sechskant-Mutter, ausgebildet. Dies erleichtert unter anderem den Zusammenbau der Einrichtung. Die Aussenwand der sich an die genannte äussere Randpartie 23 anschliessenden Mittelpartie 24 des Abschnittes 21 ist hinsichtlich der Aussenwand der äusseren Randpartie 23 gegen die Längsachse A der Einrichtung hin zurückversetzt, so dass die Mittelpartie 24 schmäler ist als die Aussenpartie 23. Die Aussenwand der Mittelpartie 24 am äusseren Endstückabschnitt 21 ist mit dem bereits erwähnten Gewinde 12 versehen, welches das Einschrauben des Endstückes 2 in das Mantelrohr 1 ermöglicht.

Im äusseren Endstück-Abschnitt 21 ist eine mittige Oeffnung 25 ausgeführt, welche einen der Abschnitte des bereits erwähnten Hohlraumes 3 im Endstück 2 darstellt. Die Oeffnung 25 weist einen Abschnitt mit einer zylinderförmigen Wand auf, in dem ein Gewinde 27 zum Einschrauben der Endpartie eines der Rohre des Leitungssystems ausgeführt ist. Im Bereich des Mittelabschnittes 24 verjüngt sich die Wand 28 des Hohlraumes 3 konusförmig, wobei der Durchmesser der engsten Stelle dieses Hohlraumes 3 dem Innendurchmesser des angeschlossenen Leitungsrohres entsprechen soll. Die Neigung der Wand 28 ist verhältnismässig klein, so dass die konusförmige Wand 28 des Hohlraumes 3 sich im inneren Endstück-Abschnitt 22 fortsetzt.

An die Mittelpartie 24 des äusseren Endstück-Abschnittes 2 schliesst sich der innere Endstück-Abschnitt 22 an. Dieser Innenabschnitt 22 ist im wesentlichen hülsenförmig. Die Hülsenseitenwand 29 schliesst sich an die Wandung der Mittelpartie 24 derart an, dass die Oberfläche 28 des Hohlraumes 3 glatt ist. Am freien Ende der Hülsenwand 29 ist der Boden 30 der Hülse 22 angebracht. Im sich an den Boden 30 unmittelbar anschliessenden Bereich weist die Hülsenwand 29 einen praktisch zylinderförmigen Abschnitt 31 auf, welcher die engste Stelle des Hohlraumes 3 im Endstück 2 darstellt. Im in Fig. 1 dargestellten Beispiel ist die innere Oberfläche 34 des Bodens 30 plan.

Die Aussenseite des Hülsenbodens 30 ist wenigstens abschnittsweise mit einer umlaufenden Wand 32 versehen, welche praktisch rechtwinklig zum Boden 30 steht. Die innere Abmessung der Umlaufwand 32 ist so gewählt, dass im durch diese Wand 32 seitlich begrenzten Hohlraum eine der Endpartien der Magnetanordnung 5 Platz finden kann. Falls das Gehäuse 10 für die Magnete 7 aus einem Kunststoff ist, dann können die Endpartien des Gehäuses 10 im durch die umlaufende Wand 32 seitlich begrenzten Hohlraum direkt sitzen. Falls das Magnetengehäuse 10 jedoch aus einem elektrisch leitenden Material ist, wie z.B. aus Kupfer, dann ist das Innere des Hohlraumes 32 mit einem Polster 33 ausgekleidet, auf dem die Endpartie 13 der Magnetanordnung 5 ruht. Dieses Polster 33 ist aus einem elektrisch isolierenden Material, vorteilhaft aus einem Kunststoff.

Die Aussenseite der Seitenwand 29 der Hülse 22 ist mit einem umlaufenden Absatz 36 versehen. Die Hülsenwand 29 weist somit einen breiteren Abschnitt 37 sowie einen schmäleren Abschnitt 38 auf. Der breitere Hülsenwandabschnitt 37 schliesst sich an den äusseren Endstück-Abschnitt 21, im Einzelnen an die Mittelpartie 24 dieses, an. Der äussere Durchmesser des breiteren Hülsenabschnittes 37 gleicht praktisch dem inneren Durchmesser des Mantelrohres 46, so dass der Hülsenabschnitt 37 im Mantelrohr 46 praktisch spielfrei sitzt. Der schmälere Hülsenwandabschnitt 38, welcher den bereits erwähnten Hülsenboden 30 umfasst, weist einen äusseren Durchmesser auf, der merklich kleiner ist als der Innendurchmesser des Mantelrohres 46. Zwischen den Hülsenabschnitten 37 und 38 erstreckt sich eine ringförmige Fläche 39, welche senkrecht zur Aussenwand der genannten Hülsenabschnitte 37 und 38 steht und welche diese Abschnitte 37 und 38 im Bereich des umlaufenden Absatzes 36 verbindet. Die ringförmige Verbindungsfläche 39 bildet somit den Boden eines ringförmigen Zwischenraumes 40, welcher seitlich durch die Aussenseite des schmäleren Hülsenabschnittes 38 und durch die Innenseite des Mantels 1 begrenzt ist.

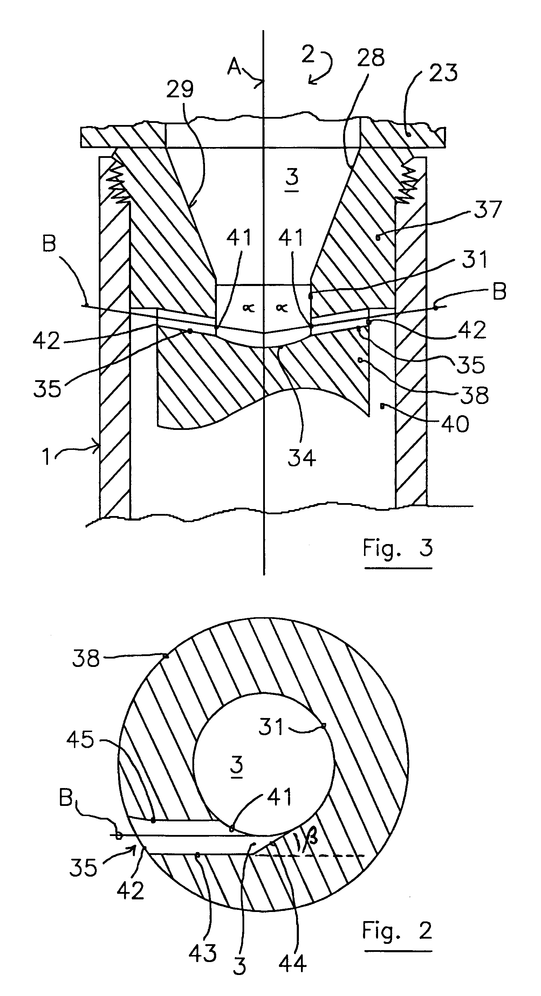

Im bodennahen oder im sich an den Boden 30 der Hülse 22 unmittelbar anschliessenden Bereich 31 der Hülsenwand 29 sind Kanäle 35 ausgeführt, welche den Hohlraum 3 im Endstück 2 mit dem Spalt 6 zwischen dem Mantel 1 und der Magnetanordnung 5 strömungsmässig verbinden. Die innere Mündung 41 (Fig. 2 und 3) des jeweiligen Verbindugskanals 35 befindet sich im zylinderförmigen Abschnitt 31 der Hülsenwand 29. Die äussere Mündung 42 des Verbindungskanals 35 befindet sich in der Aussenseite des schmäleren Hülsenabschnittes 38, so dass diese Mündung 42 zwischen der Ringfläche 39 an der Hülse 22 und dem Boden 30 der Hülse 29 liegt. Die Aussenmündung 42 ist zwar gegen die Innenseite des Mantels 1 gerichtet, aber die Aussenwand der Hülse 29 steht in diesem Bereich der Einrichtung dank der Ringfläche 39 in einem Abstand von der Innenseite des Mantels 1 ab, so dass der Kanal 35 in den ringförmigen Zwischenraum 40 mündet. Durch diesen Zwischenraum 40 gelangt das Fluid in den breiteren Spalt 6 der Einrichtung.

Die Verbindungskanäle 35 sind so ausgeführt und angeordnet, dass die Fluidstränge, welche durch die Verbindungskanäle 35 in den Spalt 6 gelangen, zumindest teilweise die Form einer Schraubenlinie aufweisen und dass ein Abschnitt des jeweiligen Stranges sich zwischen den entsprechenden Abschnitten zumindest eines zweiten Stranges befindet.

Das Endstück 2 ist zumindest mit zwei Verbindungskanälen 35 versehen, welche sich, in der Umlaufrichtung der Hülse 22, in gleichen Abständen voneinander befinden. Zweckmässigerweise liegen die Kanäle 35 auf derselben Höhe hinsichtlich der Längsachse A der Einrichtung (Fig. 1). Wenn das Endstück 2 mit nur zwei Verbindungskanälen 35 versehen ist, dann liegen diese einander gegenüber, wie dies in Fig. 1 dargestellt ist. Der Winkelabstand zwischen solchen Kanälen 35 beträgt 180 Grad. Wenn drei Verbindungskanäle 35 vorhanden sind, dann sind sie entlang der Hülsenwand 31 in gleichen Abständen voneinander verteilt, so dass der Winkelabstand zwischen den benachbarten Verbindungskanälen 120 Grad beträgt.

In Fig. 2 ist ein Schnitt durch die Hülsenwand 29 quer zur Längsachse A der Einrichtung dargestellt. Dieser Schnitt schneidet die Verbindungskanäle 35, wobei allerdings nur einer dieser Kanäle 35 in Fig. 2 dargestellt ist. Der Hauptteil 43 des Verbindungskanals 35 verläuft geradlinig, wobei die Längsachse B dieses Kanalteiles 43 praktisch tangential zur Kontur der zylinderförmigen Oeffnung 31 in diesem Abschnitt 38 der Hülse 22 verläuft. Wie aus Fig. 1 ersichtlich ist, liegen die Längsachsen B der Verbindungskanäle 35 in einer Ebene, welche zur Längsachse A des mittigen Hohlraumes 3 senkrecht steht.

Um Turbulenzen des Fluids im Bereich der Mündungen 41 und 42 des Verbindungskanals 35 auf ein Minimum zu reduzieren, sind Anschrägungen 44 und 45 in den Mündungen 41 und 42 ausgeführt. Bei der inneren Mündung 41 ist die Anschrägung 44 an der Aussenseite der Kanallängsachse B angeordnet. Diese Anschrägung 44 kann als ein planer Abschnitt der Wand des Kanals 35 ausgeführt sein, welcher nicht parallel zur Längsachse B des Kanals 35 verläuft. Der Winkel Beta, welchen dieser Wandabschnitt 44 mit der Kanallängsachse B schliesst, kann beispielsweie 30 Grad betragen. Bei der äusseren Mündung 42 befindet sich die Anschrägung 45 im Bereich der inneren Kante der Mündung 42. Diese Anschrägung 45 kann als eine plane oder aber als eine gekrümmte Fläche ausgeführt sein.

In Fig. 3 ist eine weitere Ausführungsform des Endstückes 2 dargestellt, bei welcher die Längsachse B des jeweiligen Verbindungskanals 35 mit der Längsachse A der Einrichtung einen Winkel Alpha schliesst, welcher kleiner ist als 90 Grad. Die Achse B des jeweiligen Verbindungskanals 35 verläuft in bezug auf eine Querebene zur Einrichtungslängsachse A in der Weise geneigt, dass die Mündung 41 des Verbindungskanals 35, welche sich im mittigen Hohlraum 3 befindet, tiefer liegt als jene Mündung 42, welche dem ringförmigen Zwischenraum 40 zugeordnet ist. Die Kanäle 35 verlaufen somit steigend, wenn man den Verlauf derselben von der inneren Mündung 41 gegen die äussere Mündung 42 hin betrachtet. Der Neigungswinkel Alpha der Verbindungskanäle 35 liegt vorteilhaft zwischen 81 und 89 Grad gegenüber der Längsachse A des mittigen Hohlraumes 3. Bei dieser Ausführungsform des Endstückes 2 ist die Oberseite 34 des Hülsenbodens 30 nach aussen gewölbt, was strömungsmässige Vorteile beim Eintritt des Fluids in die Verbindungskanäle 35 mit sich bringt.

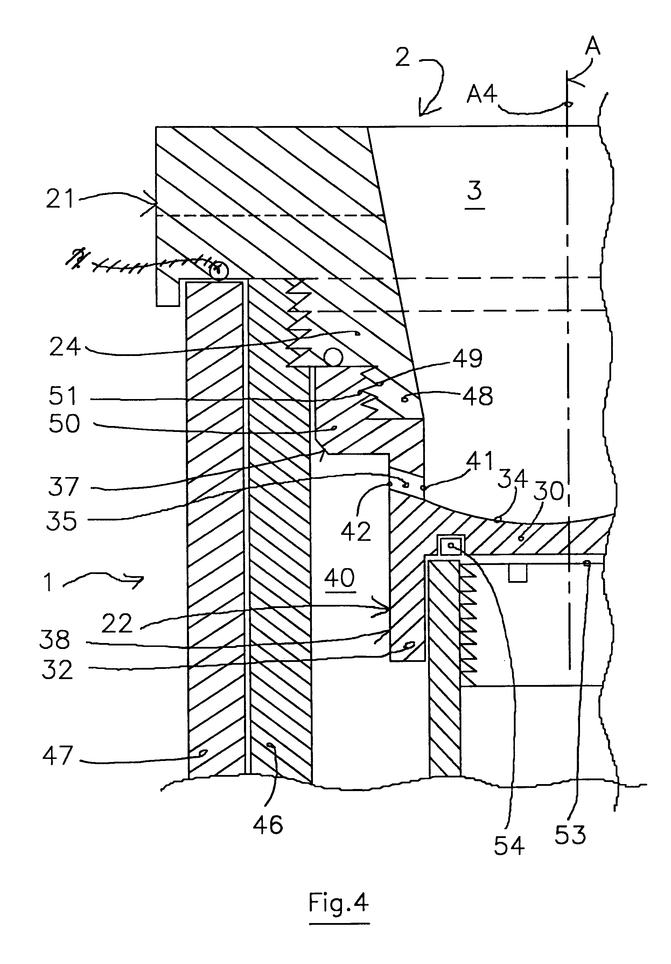

Fig. 4 zeigt einen Ausschnitt aus einer weiteren Ausführungsform der vorliegenden Einrichtung in einem vertikalen Längsschnitt, und zwar nur die linke Hälfte derselben. Diese Einrichtung ist im wesentlichen gleich ausgebildet wie die Einrichtung gemäss Fig. 1. Im Unterschied zu Fig. 1 umfasst der Mantel 1 zwei Rohre 46 und 47, wobei das eine Rohr 46 im anderen Rohr 47 spielfrei eingesetzt ist. Das innere Rohr 46 ist aus einem weichmagnetischen Material und es entspricht somit jenem Rohr, welches bei der Einrichtung gemäss Fig. 1 den Mantel 1 darstellt. Das äussere Mantelrohr 47 ist aus einem Material, welches beispielsweise gegen Schlageinwirkungen widerstandsfähig ist, dessen Oberfläche sich gut behandeln lässt, beispielsweise durch Auftragen von Email, usw. Auch bei dieser Ausführung des Mantels 1 ist die Innenseite des Innenrohres 46 mit der vorstehend bereits beschriebenen und gegen Rostbefall schützenden Schicht vorteilhaft versehen.

Ein weiterer Unterschied dieser Einrichtung gegenüber der Einrichtung gemäss Fig. 1 betrifft die Ausbildung des Endstückes 2. Das Endstück 2 besteht im vorliegenden Fall aus zwei Teilen, welche dem bereits beschriebenen äusseren Endstück-Abschnitt 21 bzw. inneren Endstück-Abschnitt 22 entsprechen. Diese gesonderten Abschnitte 21 und 22 sind zum Endstück 2 miteinander verbunden. Zu diesem Zweck schliesst sich ein rohrstückförmiger Flansch 48 an die Stirnseite der Mittelpartie 24 des Aussenabschnittes 21 an, wobei die Aussenseite dieses Rohrstückflansches 48 mit einem Gewinde 49 versehen ist. Die Innenseite der freien Randpartie 50 der Hülse 22 ist ebenfalls mit einem Gewinde 51 versehen und der Innendurchmesser dieser Randpartie 50 ist so bemessen, dass der Rohrflansch 48 in die Randpartie 50 eingeschraubt werden kann.

An die mit dem Gewinde 51 versehene Randpartie 50 schliesst sich der breite Abschnitt 37 der Hülse an. Im schmalen Abschnitt 38 der Hülse sind die bereits beschriebenen Verbindungskanäle 35 ausgeführt. Der untere Rand der inneren Mündung 41 des Verbindungskanals 35 schliesst sich an die Oberseite 34 des Bodens 30 an, woraus sich ein minimaler Widerstand für den Fluid ergibt, wenn es in den Kanal 35 einströmt. In der Aussenseite 53 des Hülsenbodens 30 sind Vertiefungen 54 ausgeführt, in welchen entsprechende Vorsprünge eines der Werkzeuge (nicht dargestellt) rasten können, die zum Zusammenschrauben der Teile 21 und 22 des Endstückes dienen.

Es versteht sich, dass die zweiteiligen Endstücke 2 auch dann verwendet werden können, wenn die Einrichtung einen nur einfachen Mantel 1 aufweist, welcher beispielsweise im Zusammenhang mit Fig. 1 beschrieben worden ist. Andererseits ist es ohne weiteres möglich, den Doppelmantel (Fig. 4) im Zusammenhang mit den einteiligen Endstücken zu verwenden.

Im Vorstehenden ist die Ausbildung der Endstücke im Zusammenhang mit jener Partie der Einrichtung beschrieben, durch welche das Fluid in die Einrichtung gelangt. Es versteht sich, dass ein solches Endstück 2 auch in jenem Bereich der Einrichtung verwendet werden kann, wo das Fluid die Einrichtung verlässt. In einem solchen Fall befindet sich der äussere Endabschnitt 21 des Auslass-Endstückes 2 unten. Folglich sind die Achsen B der Verbindungskanäle 35 im Auslass-Endstück 2 so geneigt, dass die innere Kanalmündung 41 höher liegt als die äussere Kanalmündung 42.

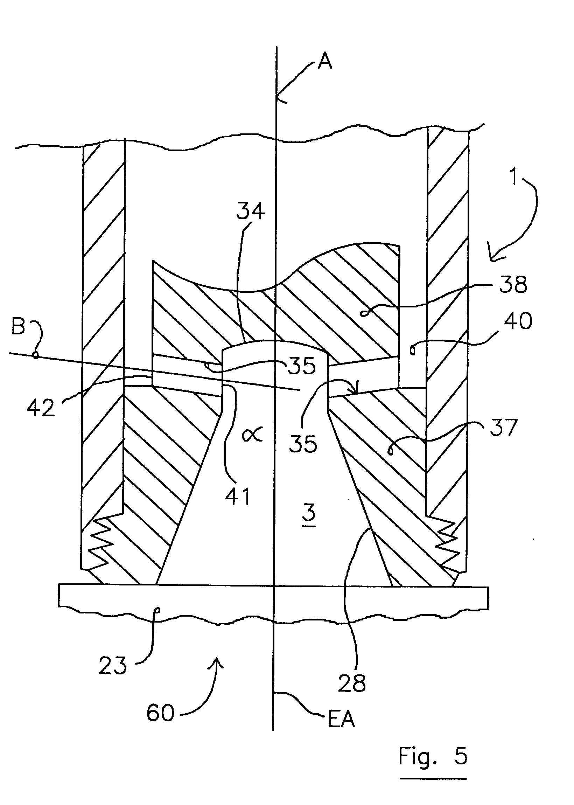

Unter Umständen kann es jedoch zweckmässig sein, dass die Neigung der Verbindungskanäle im Auslass-Enstück 2 an die Richtung des Abflusses von Fluid aus der Einrichtung angepasst ist. Ein solches Endstück 60 ist in Fig. 5 dargestellt, wobei dieses Endstück 60 im übrigen dem Endstück gemäss Fig. 3 weitgehend entspricht. Bei diesem Auslass-Endstück 60 ist der Verbindungskanal 35 so geneigt, dass die äussere Mündung 42 desselben höher liegt als die innere Kanalmündung 41. Dies hat zur Folge, dass Fluid, welches sich im Zwischenraum 40 befindet, durch den Verbindungskanal 35 bloss unter der Einwirkung von Schwerkraft in den Hohlraum 3 abfliessen kann. Diese Massnahme unterstützt die Entleerung des Spaltes 6. Der Winkel Alpha, welchen die Achse B des Verbindungskanals 35 mit dem Endabschnitt EA der Hohlraumachse A schliesst, ist grösser als 90 Grad und die Grösse dieses Winkels Alpha liegt vorteilahaft zwischen 91 und 99 bzw. 110 und 130 Grad.

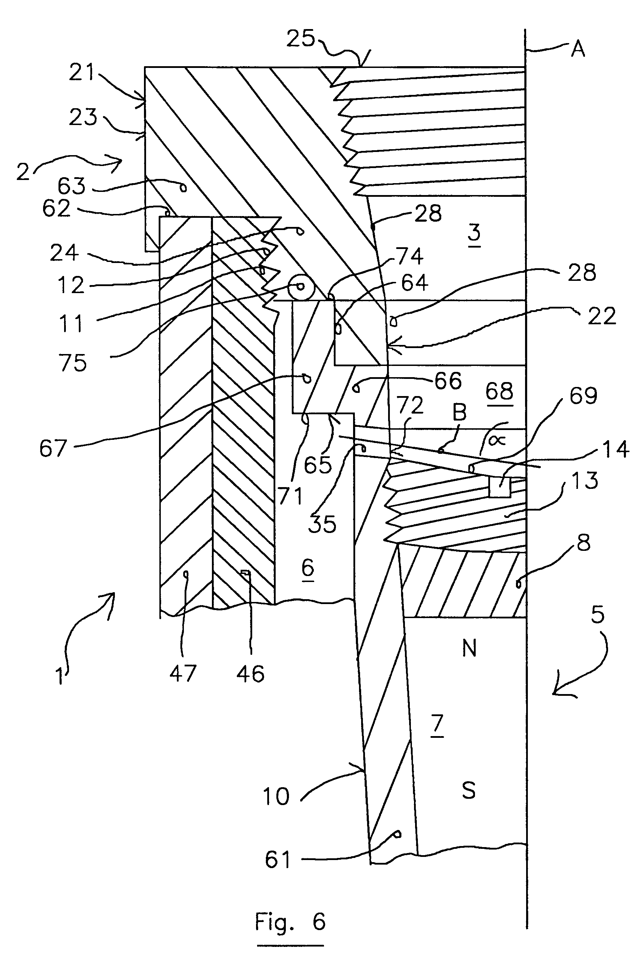

Fig. 6 zeigt eine der Endpartien der vorliegenden Einrichtung. Diese Einrichtung weist den Mantel 1 auf, welcher praktisch rohrförmig ist. Dieser Mantel 1 umfasst das Rohrstück 46, welches aus einem weichmagnetischen Material ist. Als ein solches Material kommt beispielsweise rostfreier Stahl in Frage. Aber auch in diesem Fall ist die Innenseite des Mantelrohres 46 mit einer Schutzschicht vorteilhaft versehen, welche den Mantel 1 gegen Rostbefall schützt. Materiale für solche Schutzschichten sind allgemein bekannt und als Beispiel für ein solches Material kann Berlacryl von der Firma Berlac AG genannt werden. Der Mantel 1 kann ferner das zweite, äussere Rohrstück 47 umfassen. Dieses Mantelrohr 47 ist aus einem Material, welches beispielsweise gegen Schlageinwirkungen widerstandsfähig ist, dessen Oberfläche sich gut behandeln lässt, beispielsweise durch Auftragen von Email, usw.

An jedem Ende des Mantels 1 befindet sich ein Endstück 2, welches mit der betreffenden Endpartie des Mantels 1 verbindbar ist und diese verschliesst. Im dargestellten Beispiel ist die Innenseite des Rohrstückes 46 mit einem Gewinde 11 und die Aussenseite des Endstückes 2 mit einem entsprechenden Gewinde 12 versehen. Das Endstück 2 kann somit in die Endpartie des Mantels 1 insbesondere des Rohrstückes 46 eingeschraubt werden. Die Endstücke 2, welche an den Enden des Mantels 1 angeschraubt sind, können gleich ausgebildet sein.

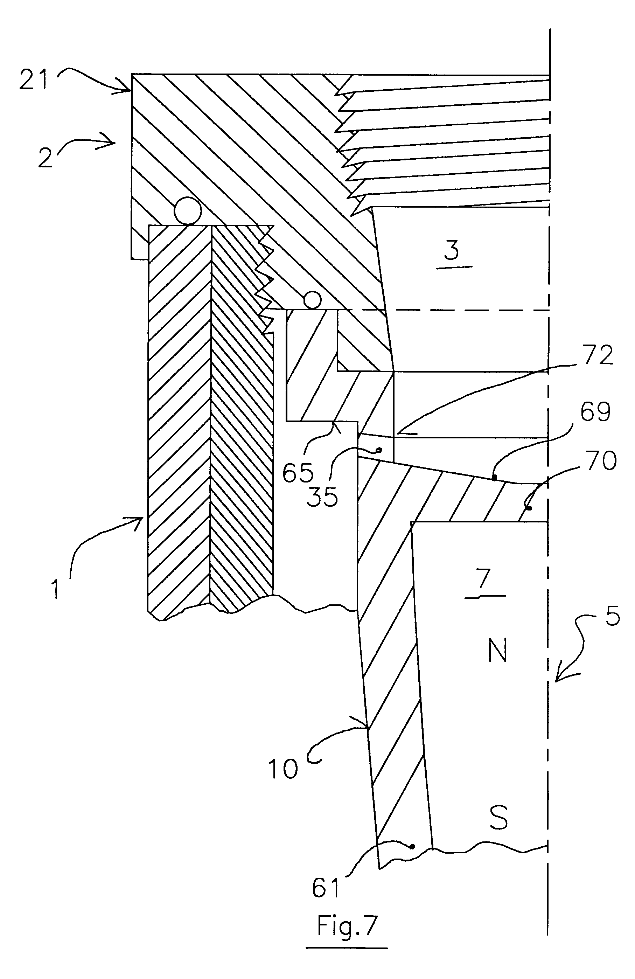

Die Magnetanordnung 5 umfasst ferner ein rohrförmiges Gehäuse 10, welches unter anderem auch ein Rohrstück 61 umfasst. In diesem Rohrstück 61 befinden sich die Magnete 7 und die Einlagen 8, welche hintereinander angeordnet sind und sich abwechseln. Die Innenwand des Gehäuserohres 61 ist im Bereich wenigstens einer der Endpartien desselben mit einem Gewinde versehen, in dem ein Stopfen 13 eingeschraubt ist. Wenn nur eine Endschraube 13 verwendet wird, dann kann man das andere Ende des Gehäuserohres 10 mit einem fest angebrachten Boden 70 (Fig. 7) verschliessen. Der Stopfen 13 ist als eine Bolzenschraube (Madenschraube) ausgeführt, wobei in der Oberseite 69 derselben mit einem Schlitz 14 zum Einsetzen eines Schraubenziehers (nicht dargestellt) versehen ist. Eine der Einlagen 8 befindet sich auch zwischen dem letzten der Permanentmagnete 7 und der im Inneren des Gehäuses 10 liegenden Stirnfläche der Endschraube 13 bzw. des Bodens 69.

In der an der Aussenseite liegenden Bodenwand der äusseren Randpartie 23 des äusseren Endstück-Abschnittes 21 ist eine umlaufende Rille 62 ausgeführt. Die Breite dieser Rille 62 gleicht praktisch der Dicke des Mantels 1, so dass dieser in der Rille 62 Platz finden kann, wenn die Einrichtung zusammengebaut ist. Zur Verbesserung der Dichtung zwischen dem Endstück 2 und dem Mantel 1 ist ein O-Ring 63 in der Rille 62 eingelegt.

Die Aussenwand der sich an die genannte äussere Randpartie 23 anschliessenden Mittelpartie 24 des Abschnittes 21 ist hinsichtlich der Aussenwand der äusseren Randpartie 23 gegen die Längsachse A der Einrichtung hin zurückversetzt, so dass die Mittelpartie 24 schmäler ist als die Aussenpartie 23 bzw. einen kleineren Durchmesser als diese aufweist. Die Aussenwand der Mittelpartie 24 ist mit dem bereits erwähnten Gewinde 12 versehen, welches das Einschrauben des Endstückes 2 in den Mantel 1 ermöglicht.

Im äusseren Endstück-Abschnitt 21 ist die mittige Oeffnung 25 ausgeführt, welche einen der Abschnitte der seitlichen Begrenzung des bereits erwähnten Hohlraumes 3 im Endstück 2 darstellt. Die Oeffnung 25 weist einen Abschnitt mit einer zylinderförmigen Wand auf, in der ein Gewinde 27 zum Einschrauben eines der Rohre des Leitungssystems ausgeführt ist. Im Bereich des Mittelabschnittes 24 verjüngt sich die Wand 28 des Hohlraumes 3 konusförmig, wobei der Durchmesser der engsten Stelle dieses Wandabschnittes 28 dem Innendurchmesser des angeschlossenen Leitungsrohres entsprechen soll. Die Neigung der Wand 28 ist verhältnismässig klein, so dass die konusförmige Wand 28 des Hohlraumes 3 sich im inneren Endstück-Abschnitt 22 fortsetzt.

An die Mittelpartie 24 des äusseren Endstück-Abschnittes 21 schliesst sich der innere Endstück-Abschnitt 22 an. Dieser Innenabschnitt 22 ist im wesentlichen zylinderförmig. Die innere Wand 29 einer solchen Hülse schliesst sich an die Innenwand 28 der Mittelpartie 24 an.

Das Gehäuse 10 weist, wie dies bereits erwähnt worden ist, ein Rohrstück 61 auf, in dem sich die Magnetanordnung 5 befindet. Das Gehäuse 10 weist ferner zumindest eine Schale bzw. Büchse 65 auf, welche sich an das eine der Enden des Rohrstückes 61 anschliesst. Die Schale 65 umfasst einen planen Boden 66 und eine zylinderförmige Seitenwand 67, wobei eine der Randpartien dieser Seitenwand 67 mit dem äusseren Rand des Bodens 66 einstückig ist. Die Schale 65 schliesst sich an das Rohrstück 61 über den Boden 66 derselben an, wobei in diesem Boden 66 eine Durchgangsöffnung 68 ausgeführt ist.

Der innere Durchmesser der Schale 65 ist grösser als der äussere Durchmesser des Rohrstückes 61. Der innere Durchmesser der Schalenseitenwand 67 ist praktisch gleich gross oder ein wenig grösser als der äussere Durchmesser der Aussenseite 64 des inneren Endstückabschnittes 22, so dass dieser in der Büchse bzw. Schale 65 Platz finden kann, wenn die Einrichtung zusammengebaut ist. Die Seitenwand 67 der Schale 65 umgibt bzw. umfasst somit den inneren Abschnitt 22 des Endstückes 2. Der Durchmesser der Durchgangsöffnung 68 im Schalenboden 65 gleicht praktisch dem inneren Durchmesser der Oeffnung 29 im inneren Endstückabschnitt 22, so dass das Fluid durch die beiden Oeffnungen 29 und 68 in das Rohrstück 61 des Gehäuses 10 gelangen kann, ohne dass dabei nennenswerte Turbulenzen im Fluid entstehen können. Der Hohlraum 3 im Endstück 2 ist innseitig durch die Oberseite 69 der Schraube 13 bzw. der Bodenwand 70 abgeschlossen. Diese Oberseite 69 kann vertieft ausgeführt sein, so dass die mittlere Partie der Oberseite 69 tiefer liegt als die Randpartie derselben.

Die Randpartie der Oberseite 69 der Schraube 13 bzw. der Bodenwand 70 liegt tiefer als die Unterseite 71 des Bodens 66 der Schale 65, so dass zwischen der Oberseite 69 und der Bodenunterseite 71 ein kurzer Abschnitt 72 der Wand des Rohrstückes 61 vorhanden ist. In diesem Wandabschnitt 72 sind Kanäle 35 ausgeführt, durch welche das Fluid aus dem Inneren des Endstückes 2 in den Ringspalt 6 im Mantel 1 gelangen kann. Die Verbindungskanäle 35 sind so ausgeführt und angeordnet, dass die Fluidstränge, welche durch die Verbindungskanäle 35 in den Spalt 6 gelangen, zumindest teilweise die Form einer Schraubenlinie aufweisen und dass ein Abschnitt des jeweiligen Stranges sich zwischen den entsprechenden Abschnitten zumindest eines zweiten Stranges befindet. Das Endstück 2 ist zumindest mit zwei Verbindungskanälen 35 versehen, welche sich, in der Umlaufrichtung des Wandabschnittes 72 gesehen, in gleichen Abständen voneinander befinden. Die Längsachse 8 des jeweiligen Verbindungskanals 35 bildet mit der Längsachse A der Einrichtung einen Winkel Alpha, welcher kleiner ist als 90 Grad.

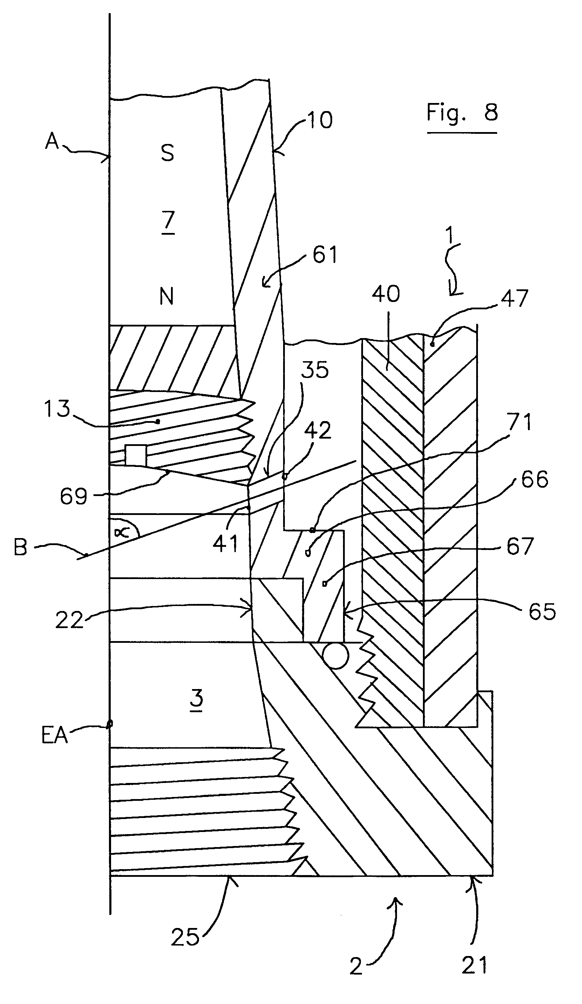

Es kann verlangt werden, dass das Gehäuse 10 im Bereich des Einlass-Endstückes 2 keine Schraube 13 aufweist. In einem solchen Fall befindet sich diese Schraube 13 nur im Bereich des Auslass-Endstückes 2 (Fig. 8). Der Innenraum 3 im Bereich des Einlass-Endstückes 2 ist in einem solchen Fall durch die bereits genannte feste Wand 70 (Fig. 7) innseitig abgeschlossen, welche sich im Inneren des Rohrstückes 61 unterhalb der Verbindungskanäle 35 befindet. Die Oberseite 69 dieser Querwand ist vorteilhaft gleich geformt wie die Oberseite der Schraube 13 in Fig. 6, wobei das Endstück 2 gemäss Fig. 7 im übrigen dem Endstück 2 gemäss Fig. 6 gleicht.

Im Vorstehenden ist die Ausbildung der Endstücke im Zusammenhang mit jener Partie der Einrichtung beschrieben worden, durch welche das Fluid in die Einrichtung gelangt. Es versteht sich, dass ein solches Endstück 2 auch in jenem Bereich der Einrichtung verwendet werden kann, wo das Fluid die Einrichtung verlässt. In einem solchen Fall ist das Ausslass-Endstück 2 gegenüber dem Einlass-Endstück 2 um 180 Grad gedreht angeordnet, wie dies in Fig. 8 angedeutet ist. Der äussere Endabschnitt 21 eines solchen Auslass-Endstückes 2 befindet sich somit unten.

Das in Fig. 8 dargestellte Endstück 2 gleicht im wesentlichen dem Endstück 2 gemäss Fig. 6. Der einzige Unterschied gegenüber dem Endstück 2 gemäss Fig. 6 kann im Verlauf der Verbindungskanäle 35 liegen. Aus der strömungstechnischen Sicht ist es vorteilhaft, wenn die Neigung der Verbindungskanäle 35 im Auslass-Endstück 2 an die Richtung des Abflusses von Fluid aus dem Spalt 6 angepasst ist. Bei diesem Auslass-Endstück 60 ist der Verbindungskanal 35 so geneigt, dass die äussere Mündung 42 desselben höher liegt als die innere Kanalmündung 41. Dies hat zur Folge, dass das Fluid, welches sich im Spalt 6 befindet, durch den Verbindungskanal 35 bloss unter der Einwirkung von Schwerkraft in den Hohlraum 3 abfliessen kann. Diese Massnahme unterstützt die Entleerung des Spaltes 6. Der Winkel Alpha, welchen die Achse B des Verbindungskanals 35 mit dem Endabschnitt EA der Hohlraumachse A schliesst, ist grösser als 90 Grad und die Grösse dieses Winkels Alpha liegt vorteilahaft zwischen 91 und 99 bzw. 110 und 130 Grad.

Die Endstücke 2 können vorteilhaft aus einem Kunststoff, wie z.B. aus Teflon, sein. Auch das Gehäuse 10 kann aus einem Kunststoff sein. Dies erlaubt, diese Bestandteile 2 und 10 der vorliegenden Einrichtung kostengünstig herzustellen.

Die Dicke jener Wand 61 des Gehäuses 10, in welcher der Kanal bzw. die Kanäle 35 ausgeführt sind, kann zwischen 7 und 15 mm liegen. Denn je dicker die Wand 61 des Rohrstückes 61 im Gehäuse 10 ist, um so besser lässt sich der Verlauf des Fluidstromes durch die Kanäle 35 formen.

Die Schale bzw. der Topf 65 am Gehäuse 10 ist auf den inneren Abschnitt 22 des Endstückes 2 bloss aufgesetzt, so dass es nicht ohne weiteres sichergestellt ist, dass der Spalt zwischen diesen zwei Teilen 22 und 65 der vorliegenden Einrichtung für das Fluid ausreichend dicht ist. Um diesen Spalt abzudichten, ist ein Dichtungsring 75 zwischen der Stirnfläche der Seitenwand 67 der Schale 65 und der gegenüberliegenden Stirnfläche 74 am Endstück 2 angeordnet.

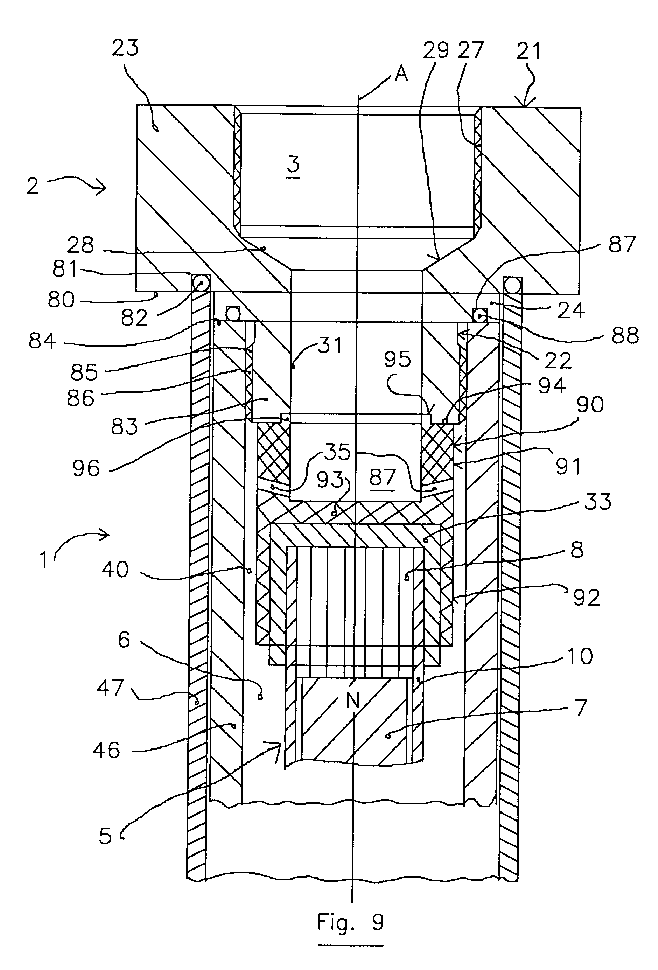

Fig. 9 zeigt eine besonders vorteilhafte Ausführungsform der vorliegenden Einrichtung. Diese weist, ähnlich wie die Ausführungsformen gemäss Fig. 1 bzw. 4, ein Einlauf-Endstück 2 auf. Dieses umfasst einen äusseren Abschnitt 21 und einen inneren Abschnitt 22. Die äussere Randpartie 23 des äusseren Endstück-Abschnittes 21 ist als eine Mutter, vorteilhaft als Sechskant-Mutter, ausgebildet.

Die Aussenwand der sich an die äussere Randpartie 23 anschliessenden Mittelpartie 24 des äusseren Endstück-Abschnittes 21 ist zylinderförmig und sie ist hinsichtlich der Aussenwand der äusseren Randpartie 23 desselben gegen die Längsachse A der Einrichtung hin zurück versetzt. Folglich ist die Mittelpartie 24 schmäler bzw. sie weist einen kleineren Durchmesser auf als die Randpartie 23. Die Aussenwand der Mittelpartie 24 ist durch die Endpartie des bereits erwähnten Rohres 47 aus einem Kunststoff oder ähnlich umgeben. In der Grundfläche 80 der äusseren Randpartie 23 ist im Bereich der Stirnfläche des Isolierrohres 47 eine umlaufende Rille 81 ausgeführt, in der ein Dichtungsring 82 eingelassen ist. Auf diesem Dichtungsring 82 liegt die Stirnfläche des Isolierrohres 47 auf, wenn sich die Einrichtung im zusammengebauten Zustand befindet.

An die Mittelpartie 24 des äusseren Endstück-Abschnittes 21 schliesst sich der innere Endstück-Abschnitt 22 an, dessen äusserer Durchmesser kleiner ist als der Durchmesser der Mittelpartie 24. Zwischen der Aussenwand der Mittelpartie 24 und der Aussenwand des Innenabschnittes 22 erstreckt sich somit eine Schulter 84, welche im wesentlichen ringförmig ist. Dieser flächenhafte Ring 84 liegt praktisch parallel zur Grundfläche 80 der äusseren Randpartie 23. In der Ringfläche 84 ist eine weitere umlaufende Rille 87 ausgeführt, in welcher sich ein weiterer Dichtungsring 88 befindet.

Im Inneren des Isolierrohres 47 befindet sich das Rohr 46 aus einem magnetisierbaren Material, wobei die Endpartie dieses Rohres 46 den Innenabschnitt 22 des Endstückes 2 praktisch vollständig umgibt. Der Innenabschnitt 22 ist im wesentlichen rohrförmig. Die Aussenseite der Wand 83 des Rohrstückes 22 ist mit einem Gewinde 85 versehen. Die Innenseite der Endpartie des Metallrohres 46 ist mit einem entsprechenden Gewinde 86 versehen, so dass das Endstück 2 in das Metallrohr 46 eingeschraubt werden kann, um die Einrichtung im zusammengebauten Zustand zu halten. Hierbei liegt die Stirnfläche dieser Endpartie des Metallrohres 46 auf dem zweiten Dichtring 88 auf.

Zwischen der Magnetanordnung 5 und dem Endstück 2 ist ein Zwischenstück 90 angeordnet. Dieses Zwischenstück 90 ist als eine zweiseitige Hülse ausgeführt. Sie weist eine erste zylinderförmige Wand 91 sowie eine zweite zylinderförmige Wand 92 auf. Zwischen diesen Hülsenwänden 91 und 92 bzw. Hülsenabschnitten liegt ein Boden 93, von welchem sich die Hülsenwände 91 und 92 weg erstrecken.

Die Stirnfläche 94 der ersten Hülsenwand 91 liegt auf der Stirnfläche des Endstück-Innenabschnittes 22 stumpf auf. Damit die Lage dieser Stirnflächen zentriert ist, ist in diesen ein umlaufender Absatz 95 ausgeführt. Die Schultern dieses Absatzes 95 können, wie dies in Fig. 9 dargestellt ist, einen rechten Winkel zwischen sich schliessen. Dieser Winkel kann jedoch auch grösser als 90 Grad sein, so dass die achsial gerichtete Schulter 96 des Absatzes 95 in bezug auf die Längsachse A schräg verläuft. Diese Massnahme erleichtert den Zusammenbau der vorliegenden Einrichtung. Der Hohlraum 87 im Inneren des ersten Hülsenteiles 91 schliesst sich nahtlos an den Innenraum 3 im Endstück 2 an, so dass Wasser vom Endstück 2 in das Innere 87 des ersten Hülsenabschnittes 91 im Zwischenstück 90 fliessen kann. In der Wand 91 dieses ersten Hülsenabschnittes sind die bereits beschriebenen Kanäle 35 ausgeführt, welche den Innenraum 87 im ersten Hülsenteil 91 mit dem Spalt 6 der Einrichtung strömungsmässig verbinden.

Im Inneren des zweiten Hülsenabschnittes 92 befindet sich das bereits erwähnte Polster 33, in welchem eine der Endpartien der Magnetanordnung 5 eingebettet ist, wie dies im Zusammenhang mit Fig. 1 beschrieben worden ist. Der Durchmesser dieses Hohlraumes ist etwas grösser als der Durchmesser des Hohlraumes 87 im ersten Hülsenabschnitt 91, damit für das Polster 33 mehr Platz zur Verfügung steht. Die Aussenwand der Doppelhülse 90 ist glatt und zylinderförmig, um einen möglichst ungehinderten Durchfluss des Wassers von den Kanälen 35 in den Spalt 6 zu erreichen.

Es versteht sich, dass die soeben beschriebene Konstruktion auch bei Auslauf-Endstück verwendet werden kann, wobei die Kanäle 35 so auszuführen sind, wie dies im vorstehenden für die Auslauf-Endstücke beschrieben worden ist.

Einer der wesentlichen Vorteile dieser Einrichtung besteht darin, dass man beim Konstruieren dieser Einrichtung entsprechend den jeweiligen Anforderungen wesentlich freier ist. Dies deswegen, weil man diskrete Bestandteile, wie Endstück, Zwischenstück, Magnetanordnung usw. hat, deren Ausbildung sich den Gegebenheiten des jeweiligen Anwendungsfalles besser anpassen lässt.

## Patentansprüche

1. Einrichtung zur magnetischen Behandlung eines Fluids, insbesondere von Wasser, mit einem im wesentlichen rohrförmigen Mantel (1), mit einer Magnetanordnung (5), welche zumindest einen stabförmigen Magnet (7) enthält und welche im Inneren des Mantels (1) derart angeordnet ist, dass zwischen der Innenseite des Mantels und der Aussenseite der Magnetanordnung ein Spalt (6) vorhanden ist, mit Endstücken (2;60), welche den Enden des Mantels (1) zugeordnet sind und über welche die Einrichtung an ein Leitungsnetz anschliessbar ist, wobei das jeweilige Endstück einen mittigen Hohlraum (3) aufweist, und mit wenigstens zwei Kanälen (35), welche den mittigen Hohlraum (3) mit dem Spalt (6) strömungsmässig verbinden, wobei das jeweilige Endstück (2) einen äusseren Abschnitt (21) und einen inneren Abschnitt (22) aufweist, wobei der äussere Endstück-Abschnitt (21) zum Anschluss an ein Leitungsnetz sowie zum Zusammenwirken mit dem Mantel (1) der Einrichtung ausgebildet ist, wobei der innere Endstück-Abschnitt (22) wenigstens zwei Kanäle (35) aufweist, wobei die Längsachsen (B) dieser Verbindungskanäle (35) in einer Ebene liegen, welche zur Längsachse (A) des mittigen Hohlraumes (3) senkrecht steht, oder wobei die Längsachsen (B) dieser Verbindungskanäle (35) in bezug auf die genannte Querebene geneigt verlaufen und zwar derart, dass der Winkel Alpha zwischen der Kanalachse (B) und der Holraumachse (A) um 1 bis 9 Grad vom Rechten unterschiedlich ist, wobei die Kanäle (35) sich auf derselben Höhe hinsichtlich der Längsachse (A) der Einrichtung befinden, wobei die Kanäle (35) sich im bodennahen oder im sich an den Boden (30) des inneren Endstückabschnittes (22) unmittelbar anschliessenden Bereich (31) der Wand des Endstückabschnittes (29) befinden und wobei die Dicke der Wand, in welcher die Kanäle (35) ausgeführt sind, zwischen 7 und 15 mm liegt.

2. Einrichtung nach Anspruch 1, dadurch gekennzeichnet, dass im Bereich der Mündungen (41, 42) des jeweiligen Verbindungskanal (35) Anschrägungen (44,45) ausgeführt sind.

3. Einrichtung nach Anspruch 1, dadurch gekennzeichnet, dass eine Bohrung (25) im äusseren Endstück-Abschnitt (21) ausgeführt ist, dass der innere Abschnitt (22) des Endstückes (2) im wesentlichen hülsenförmig ist, dass der die Hülsenöffnung begrenzende Rand (50) an den äusseren Abschnitt (21) des Endstückes (2) angeschlossen ist, derart, dass die Innenwand (28) des Hohlraumes (3) in der Hülse (22) sich an die Innenwand (28) der Oeffnung (25) im äusseren Endstück-Abschnitt (21) anschliesst, dass die Verbindungskanäle (35) im bodennahen, in am Boden angrenzenden Bereich (31) oder im Boden (30) der Hülse (22) ausgeführt sind, dass der äussere Abschnitt (21) und der innere Abschnitt (22) des Endstückes (2) als selbständige Bestandteile ausgeführt sind, und dass die Teile (48,50) dieser Abschnitte (21,22) des Endstückes (2) mit Mitteln (49,51) versehen sind, welche es ermöglichen, die zwei Bestandteile (21,22) miteinander zu verbinden.

4. Einrichtung nach Anspruch 1, bei der die Kanallängsachse (B) im Einlass-Endstück (2) geneigt verläuft, dadurch gekennzeichnet, dass die Grösse des Neigungswinkels Alpha der Kanalachse (B) gegenüber dem anschlusseitigen Abschnitt (AA) der Längsachse (A) des mittigen Hohlraumes (3) zwischen 81 und 89 Grad liegt.

5. Einrichtung nach Anspruch 1, dadurch gekennzeichnet, dass die Längsachsen (B) der Verbindungskanäle (35) im Einlass-Endstück (2) in einer Ebene liegen, welche zur Längsachse (A) des mittigen Hohlraumes (3) senkrecht steht, oder dass die Längsachsen (B) der Verbindungskanäle (35) in bezug auf die genannte Querebene geneigt steigend verlaufen und zwar derart, dass der Winkel Alpha zwischen der Kanalachse (B) und der Hohlraumachse (A) um 1 bis 9 Grad vom Rechten unterschiedlich ist, oder dass die Neigung der Verbindungskanäle (35) im Auslass-Endstück (2) an die Richtung des Abflusses von Fluid aus dem Spalt (6) angepasst ist, d.h. dass die äussere Mündung (42) der Kanäle (35) höher liegt als die innere Mündung (41) desselben.

6. Einrichtung nach Anspruch 1, bei der die Kanallängsachsen (B) im Auslass-Endstück (2) geneigt verlaufen, dadurch gekennzeichnet, dass die Grösse des Neigungswinkels Alpha der Kanalachse (B) gegenüber dem Endabschnitt (EA) der Längsachse (A) des mittigen Hohlraumes (3) zwischen 110 und 130 Grad liegt.

7. Einrichtung nach Anspruch 1, dadurch gekennzeichnet, dass der Hohlraum (3) im Endstück (2) innseitig durch eine quer zur Längsachse (A) der Einrichtung stehende Wand (13;70) abgeschlossen ist, dass diese Wand sich im Inneren des Rohrstückes (61) befindet, so dass zwischen der Oberseite (69) dieser Wand (13;70) und der Unterseite (71) des schalenförmigen Abschnittes (65) ein Abschnitt (72) der Wand des Rohrstückes (61) vorhanden ist, und dass die Kanäle (35) in diesem Wandabschnitt (72) ausgeführt sind.

8. Einrichtung nach Anspruch 1, dadurch gekennzeichnet, dass ein hohles Zwischenstück (90) zwischen der Magnetanordnung (5) und dem Endstück (2) angeordnet ist und dass die Kanäle (35) in der Wand (91) des Zwischenstückes (90) ausgeführt sind.

9. Einrichtung nach Anspruch 8, dadurch gekennzeichnet, dass das Zwischenstück (90) als eine zweiseitige Hülse ausgeführt ist, dass diese Hülse eine erste zylinderförmige Wand (91) sowie eine zweite zylinderförmige Wand (92) aufweist, dass zwischen diesen Hülsenwänden (91,92) ein Boden (93), von welchem sich die Hülsenwände (91,92) weg erstrecken.

10. Einrichtung nach Anspruch 1, dadurch gekennzeichnet, dass das Gehäuse (10) ein Rohrstück (61) umfasst, in dem sich die Magnetanordnung (5) befindet, dass das Gehäuse ferner zumindest einen schalen- bzw. büchsenförmigen Abschnitt (65) aufweist, welcher sich an eine der Endpartien des Rohrstückes (61) anschliesst, dass eine Partie (22) des entsprechenden Endstückes (2) in der Schale bzw. Büchse (65) liegt und dass die Kanäle (35) in der Wand des Rohrstückes (61) ausgeführt sind.

## Claims

1. Apparatus for the magnetic treatment of a fluid, particularly water, comprising an essentially tubular jacket (1), a magnet arrangement (5) which contains at least one bar-shaped magnet (7) and is arranged in the interior of the jacket (1) such that there is a gap (6) between the inner side of the jacket and the outer side of the magnet arrangement, and comprising end-pieces (2; 60) which are associated with the ends of the jacket (1) and by means of which the apparatus can be connected to a piping network, the respective end-piece having a central cavity (3), and further comprising at least two channels (35) which connect, in respect of flow, the central cavity (3) to the gap (6), wherein the respective end-piece (2) has an outer section (21) and an inner section (22), wherein the outer end-piece section (21) is designed for connection to a piping network and for cooperation with the jacket (1) of the apparatus, wherein the inner end-piece section (22) has at least two channels (35), wherein the longitudinal axes (B) of these connection channels (35) lie in a plane which is at right angles to the longitudinal axis (A) of the central cavity (3), or wherein the longitudinal axes (B) of these connection channels (35) extend obliquely relative to said transverse plane, such that the angle alpha between the channel axis (B) and the cavity axis (A) differs from a right angle by from 1 to 9 degrees, the channels (35) being situated at the same height with respect to the longitudinal axis (A) of the apparatus, the channels (35) being situated in that region of the wall of the end-piece section (29) which is near the bottom (30) of the inner end-piece section (22), or in that region (31) of said wall which directly adjoins said bottom, and the thickness of the wall in which the channels (35) are formed being between 7 and 15 mm.

2. Apparatus according to Claim 1, characterized in that bevels (44, 45) are formed in the region of the mouths (41, 42) of the respective connection channel (35).

3. Apparatus according to Claim 1, characterized in that a bore (25) is formed in the outer end-piece section (21), in that the inner section (22) of the end-piece (2) is essentially sleeve-shaped, in that the rim (50) bounding the sleeve opening is connected to the outer section (21) of the end-piece (2) such that the inner wall (28) of the cavity (3) in the sleeve (22) adjoins the inner wall (28) of the opening (25) in the outer end-piece section (21), in that the connection channels (35) are formed in the region near the bottom, in the region (31) adjoining the bottom or in the bottom (30) of the sleeve (22), in that the outer section (21) and the inner section (22) of the end-piece (2) are constructed as independent components, and in that the parts (48, 50) of these sections (21, 22) of the end-piece (2) are provided with means (49, 51) which make it possible to connect the two components (21, 22) to one another.

4. Apparatus according to Claim 1, in which the longitudinal axis (B) of the channel extends obliquely in the inlet end-piece (2), characterized in that the size of the angle of inclination alpha of the channel axis (B) relative to the section (AA), on the connection side, of the longitudinal axis (A) of the central cavity (3) is between 81 and 89 degrees.

5. Apparatus according to Claim 1, characterized in that the longitudinal axes (B) of the connection channels (35) in the inlet end-piece (2) lie in a plane which lies at right angles to the longitudinal axis (A) of the central cavity (3), or in that the longitudinal axes (B) of the connection channels (35) extend, relative to said transverse plane, obliquely upwards such that the angle alpha between the channel axis (B) and the cavity axis (A) differs from a right angle by from 1 to 9 degrees, or in that the inclination of the connection channels (35) in the outlet end-piece (2) is adapted to the direction of the outward flow of fluid from the gap (6), that is to say in that the outer mouth (42) of the channels (35) lies higher than the inner mouth (41) thereof.

6. Apparatus according to Claim 1, in which the longitudinal axes (B) of the channel extend obliquely in the outlet end-piece (2), characterized in that the size of the angle of inclination alpha of the channel axis (B) relative to the end section (EA) of the longitudinal axis (A) of the central cavity (3) lies between 110 and 130 degrees.

7. Apparatus according to Claim 1, characterized in that the cavity (3) in the end-piece (2) is closed on the inside by a wall (13; 70) located transversely to the longitudinal axis (A) of the apparatus, in that said wall is situated in the interior of the tube portion (61), so that a section (72) of the wall of the tube portion (61) lies between the upper side (69) of this wall (13; 70) and the underside (71) of the dish-shaped section (65), and in that the channels (35) are formed in this wall section (72).

8. Apparatus according to Claim 1, characterized in that a hollow intermediate piece (90) is arranged between the magnet arrangement (5) and the end-piece (2), and in that the channels (35) are formed in the wall (91) of the intermediate piece (90).

9. Apparatus according to Claim 8, characterized in that the intermediate piece (90) is constructed as a two-sided sleeve, in that said sleeve has a first cylindrical wall (91) and a second cylindrical wall (92), in that a base (93), from which the sleeve walls (91, 92) extend away, [lacuna] between these sleeve walls (91, 92).

10. Apparatus according to Claim 1, characterized in that the housing (10) comprises a tube portion (61) in which the magnet arrangement (5) is situated, in that the housing also has at least one dish-shaped or can-shaped section (65) which adjoins one of the end parts of the tube portion (61), in that a part (22) of the corresponding end-piece (2) lies in the dish or can (65), and in that the channels (35) are formed in the wall of the tube portion (61).

## Revendications

1. Dispositif de traitement magnétique d'un fluide, en particulier de l'eau, avec une enveloppe essentiellement de forme tubulaire (1), avec un arrangement d'aimants (5), qui contient au moins un aimant en forme de barre (7) et qui est disposé à l'intérieur de l'enveloppe (1) de sorte qu'entre la face interne de l'enveloppe et la face externe de l'arrangement d'aimants se trouve un entrefer (6), avec des pièces terminales (2; 60), qui sont affectées aux extrémités de l'enveloppe (1) et à l'aide desquelles le dispositif peut être raccordé à un réseau de distribution électrique, la pièce terminale correspondante présentant une cavité centrale (3), et avec au moins deux canaux (35), qui relient la cavité centrale (3) avec l'entrefer (6) en termes d'écoulement, la pièce terminale correspondante (2) présentant une section externe (21) et une section interne (22), la section de pièce terminale externe (21) étant formée en vue du raccord à un réseau de distribution électrique ainsi qu'en vue de la coopération avec l'enveloppe (1) du dispositif, la section de pièce terminale interne (22) présentant au moins deux canaux (35), les axes longitudinaux (B) de ces canaux de raccordement (35) étant situés dans un plan, qui est perpendiculaire à l'axe longitudinal (A) de la cavité centrale (3), ou les axes longitudinaux (B) de ces canaux de raccordement (35) s'étendant de manière inclinée par rapport audit plan de direction perpendiculaire et de fait d'une manière telle que l'angle alpha entre l'axe des canaux (a) et l'axe de la cavité (A) soit différent d'un angle droit d'une valeur de 1 à 9 degrés, les canaux (35) se trouvant au même niveau par rapport à l'axe longitudinal (A) du dispositif, les canaux (35) se trouvant dans le domaine (31) de la paroi de la section terminale (29) à proximité du fond ou dans le domaine (31) de la paroi de la section terminale (29) immédiatement contigu aux fonds (30) de la section de pièce terminale interne (22), et l'épaisseur de la paroi, dans laquelle les canaux (35) sont exécutés, se situant entre 7 et 15 mm.

2. Dispositif selon la revendication 1, caractérisé en ce que des chanfreins (44, 45) sont exécutés dans le domaine des embouchures (41, 42) du canal de raccordement correspondant (35).

3. Dispositif selon la revendication 1, caractérisé en ce que l'on exécute, dans la section de pièce terminale externe (21), un alésage (25), en ce que la section interne (22) de la pièce terminale (2) est essentiellement en forme de douille, en ce que le bord (50) limitant l'ouverture de la douille est raccordé à la section externe (21) de la pièce terminale (2) de sorte que la paroi interne (28) de la cavité (3) dans la douille (22) se rattache à la paroi interne (28) de l'ouverture (25) dans la section de pièce terminale externe (21), en ce que les canaux de raccordement (35) sont exécutés dans le domaine (31) à proximité du fond, adjoignant au fond ou dans le fond (30) de la douille (22), en ce que la section externe (21) et la section interne (22) de la pièce terminale (2) sont exécutées en tant que composants indépendants et en ce que les pièces (48, 50) de ces sections (21, 22) de la pièce terminale (2) sont pourvues de moyens (49, 51) qui rendent possible un raccordement des deux composants (21, 22) l'un à l'autre.

4. Dispositif selon la revendication 1, pour lequel les axes longitudinaux (B) des canaux dans la pièce terminale d'admission (2) s'étendent de manière inclinée, caractérisé en ce que la grandeur de l'angle d'inclinaison alpha de l'axe des canaux (B) par rapport à la section (AA) du côté du raccord de l'axe longitudinal (A) de la cavité centrale (3) se situe entre 81 et 89 degrés.

5. Dispositif selon la revendication 1, caractérisé en ce que les axes longitudinaux (B) des canaux de raccordement (35) dans la pièce terminale d'admission (2) se situent dans un plan, qui est perpendiculaire à l'axe longitudinal (A) de la cavité centrale (3), ou que les axes longitudinaux (B) des canaux de raccordement (35) s'étendent de manière inclinée en montant par rapport audit plan de direction perpendiculaire et de fait d'une manière telle que l'angle alpha entre l'axe des canaux (B) et l'axe (A) de la cavité est différent d'un angle droit d'une valeur de 1 à 9 degrés, ou que l'inclinaison des canaux de raccordement (35) dans la pièce terminale d'échappement (2) est adaptée à la direction de la décharge du fluide hors de l'entrefer (6), c'est-à-dire que l'embouchure externe (42) des canaux (35) se situe à un niveau plus élevé que l'embouchure interne (41) de ces derniers.

6. Dispositif selon la revendication 1, pour lequel les axes longitudinaux (B) des canaux dans la pièce terminale d'échappement (2) s'étendent de manière inclinée, caractérisé en ce que la grandeur de l'angle d'inclinaison alpha de l'axe des canaux (B) par rapport à la section terminale (EA) de l'axe longitudinal (A) de la cavité centrale (3) se situe entre 110 et 130 degrés.

7. Dispositif selon la revendication 1, caractérisé en ce que la cavité (3) dans la pièce terminale (2) est obturée du côté interne par une paroi (13; 70) érigée perpendiculairement à l'axe longitudinal (A) du dispositif, en ce que cette paroi se trouve à l'intérieur du conduit (61) de sorte que soit présente, entre la face supérieure (69) de cette paroi (13; 70) et la face inférieure (71) de la section sous forme de cuvette (65), une section (72) de la paroi du conduit (61), et en ce que les canaux (35) sont exécutés dans cette section de paroi (72).

8. Dispositif selon la revendication 1, caractérisé en ce qu'une pièce intermédiaire creuse (90) est disposée entre l'arrangement d'aimants (5) et la pièce terminale (2) et que les canaux (35) sont exécutés dans la paroi (91) de la pièce intermédiaire (90).

9. Dispositif selon la revendication 8, caractérisé en ce que la pièce intermédiaire (90) est exécutée en tant que douille à double face, en ce que cette douille présente une première paroi en forme de cylindre (91) ainsi qu'une deuxième paroi en forme de cylindre (92), en ce qu'entre ces parois de douille (91, 92) se trouve un fond (93), duquel les parois de douille (91, 92) s'écartent en s'éloignant.

10. Dispositif selon la revendication 1, caractérisé en ce que le boîtier (10) comprend un conduit (61) dans lequel se trouve l'arrangement d'aimants (5), en ce que le boîtier présente en outre au moins une section en forme de cuvette, respectivement de boîte (65), qui se rattache à l'une de parties terminales du conduit (61), en ce que l'une des parties (22) de la pièce terminale correspondante (2) se trouve dans la cuvette, respectivement dans la boîte (65) et en ce que les canaux (35) sont exécutés dans la paroi du conduit (61).
